# EUROPÄISCHE PATENTSCHRIFT

(11) **EP 0 944 510 B1**
(45) Veröffentlichungstag und Bekanntmachung des Hinweises auf die Patenterteilung: **04.09.2002**
(21) Anmeldenummer: 97952886.6
(22) Anmeldetag: 05.12.1997
(51) Int. Cl.: B60T 8/34

(54) **VERFAHREN ZUR BLASENFREIEN BEFÜLLUNG EINER HYDRAULISCHEN KRAFTFAHRZEUGBREMSANLAGE MIT BREMSFLÜSSIGKEIT**
METHOD FOR BUBBLE-FREE FILLING OF BRAKE FLUID INTO A HYDRAULIC MOTOR VEHICLE BRAKING SYSTEM
PROCEDE POUR REMPLIR SANS BULLE UNE UNITE DE FREINAGE HYDRAULIQUE DE VEHICULE A MOTEUR, AVEC UN LIQUIDE DE FREIN

(30) Priorität: 23.12.1996 DE 19654087
(43) Veröffentlichungstag der Anmeldung: 29.09.1999
(73) Patentinhaber: Continental Teves AG & Co. oHG, 60488 Frankfurt (DE)
(72) Erfinder: BAECHLE, Martin, D-61479 Glashütten (DE); SCHMITT, Stefan, A., D-63867 Johannesberg (DE)
(86) Internationale Anmeldenummer: EP9706808
(87) Internationale Veröffentlichungsnummer: WO98028173

(56) Entgegenhaltungen:
- EP-A- 0 275 351
- EP-A- 0 323 889
- EP-A- 0 482 367
- EP-B- 0 543 187
- DE-A- 3 806 840
- DE-A- 4 337 133
- DE-A- 19 602 219
- PATENT ABSTRACTS OF JAPAN vol. 095, no. 009, 31.Oktober 1995 & JP 07 165046 A (AISIN SEIKI CO LTD), 27.Juni 1995,

## Beschreibung

Die Erfindung betrifft ein Verfahren zur blasenfreien Befüllung einer hydraulischen Kraftfahrzeugbremsanlage mit Bremsflüssigkeit nach dem Oberbegriff des Patentanspruchs 1.

Aus der DE 43 37 133 A1 ist bereits eine hydraulische Kraftfahrzeugbremsanlage mit Radschlupfregelung bekannt geworden, die zwischen den Primär- und Sekundärkreisen mit zusätzlichen Rückschlagventilen ausgerüstet ist, um beim Evakuieren der Bremsanlage die im Sekundärkreis befindliche Luft zum Primärkreis entweichen zu lassen. Die zusätzliche Anordnung von Rückschlagventilen erfordert besondere konstruktive Veränderungen der Bremsanlage, die zwangsläufig zu einer Erhöhung der Herstellkosten führen.

Die gattungsbildende EP-B-543 187 beschreibt ein Verfahren zum erneuten Befüllen des Primärkreises einer blockiergeschützten Kraftfahrzeugbremsanlage unter Vakuum, nachdem die Bremsflüssigkeit zunächst zum Zweck des Einbaus in ein Kraftfahrzeug aus dem Primärkreis entfernt wurde. Der Primärkreis weist hierzu stromabwärts zu einer Dämpfungskammer ein Filterelement auf, das an die Oberflächenspannung der Bremsflüssigkeit derart angepaßt ist, daß die Bremsflüssigkeit unter Vakuum nicht aus der Dämpfungskammer entweichen kann.

In der EP-A-275351 ist ferner eine untersättigte Bremsflüssigkeit beschrieben, die nur eine geringe Löslichkeit von Gasen aufweist und die eine gewisse Fähigkeit hat, bei Unterdruck die im Bremssystem befindliche Restluft aufzunehmen.

Es ist daher die Aufgabe der Erfindung, eine hydraulische Kraftfahrzeugbremsanlage der eingangs genannten Gattung hinsichtlich des blasenfreien Befüllprozesses dahingehend zu vereinfachen, daß unter Beibehaltung des für die hydraulische Kraftfahrzeugbremsanlage notwendigen Aufbaus auf zusätzliche konstruktive Veränderungen zum Zwecke der Evakuierung und blasenfreien Befüllung des Bremsanlagen-Sekundärkreises verzichtet werden kann, wobei eine möglichst gute Absorption der im Sekundärkreis befindlichen Luft in der Bremsflüssigkeit erwünscht ist.

Diese Aufgabenstellung wird für eine hydraulische Kraftfahrzeugbremsanlage der im Oberbegriff des Patentanspruchs 1 angegebenen Art durch die kennzeichnenden Verfahrensmerkmale des Anspruchs 1 gelöst.

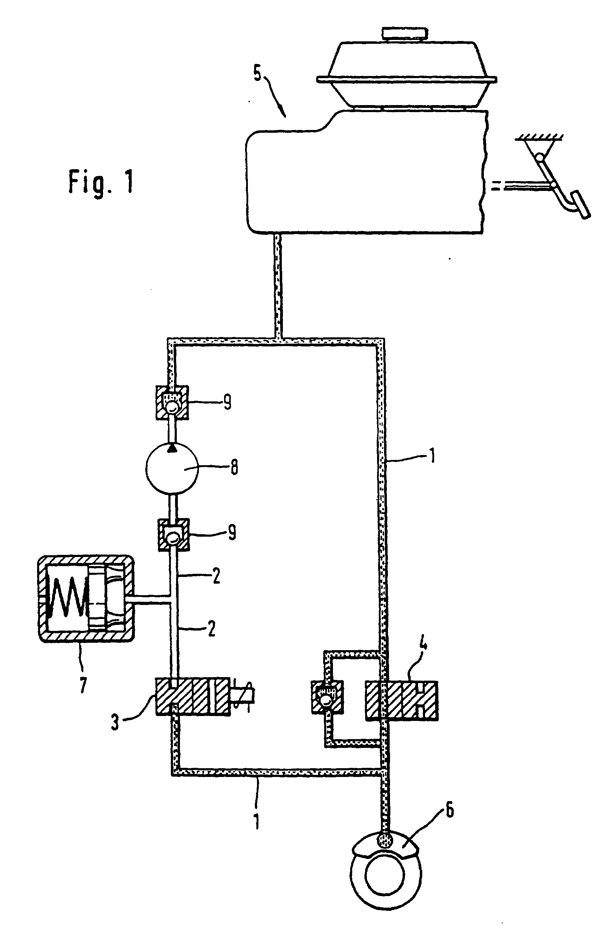

Weitere Merkmale und Vorteile der Erfindung werden im nachfolgenden anhand der Beschreibung eines Ausführungsbeispiels erläutert, das auf den prinzipiellen schaltungstechnischen Aufbau einer nach dem Rückförderprinzip arbeitenden hydraulischen, schlupfgeregelten Fahrzeugbremsanlage nach Fig. 1 Bezug nimmt.

Die Fig. 2 zeigt hierzu anhand eines Diagramms die Druckveränderung innerhalb der Bremsanlage während des Evakuier- und Füllprozesses.

In Fig. 3 werden anhand eines Diagramms die Schaltaktivitäten der in Fig. 1 gezeigten Funktionselemente angegeben.

Unter Zuhilfenahme des in Fig. 1 dargestellten prinzipiellen Aufbaus einer schlupfgeregelten Kraftfahrzeugbremsanlage wird zunächst auf die an sich bekannten Merkmale der Anlage eingegangen, die zur Regelung des Radschlupfes mit einem Einlaß-Ventilelement 4 und einem Auslaß-Ventilelement 3 versehen ist, wobei ein das Einlaß-Ventilelement 4 aufnehmender erster Kanalabschnitt 1 von einem Bremsdruckgeber 5 zu einer Radbremse 6 führt. Ein das Auslaß-Ventilelement 3 sowie einen Druckspeicher 7 aufweisender zweiter Kanalabschnitt 2 führen von der Radbremse 6 zur Saugseite einer Pumpe 8. Die Pumpe 8 ist über ein Pumpenventil 9 mit ihrer Druckseite am ersten Kanalabschnitt 1 angeschlossen. Ein weiteres Pumpenventil befindet sich im zweiten Kanalabschnitt 2 und übernimmt die Funktion eines Pumpensaugventils. Der zweite Kanalabschnitt 2 ist normalerweise durch das in der Grundstellung geschlossene Auslaß-Ventilelement 3 vom ersten Kanalabschnitt 1 getrennt. Dieser normalerweise durch elektrisch und hydraulisch schaltbare Ventile isolierte Bereich des Hydrauliksystems bildet somit den sogenannten Sekundärkreis, an dem auch der Niederdruckspeicher 7 angeschlossen ist und aus dem bei Bedarf die Pumpe 8 im Bremsbetrieb Druckmittel ansaugt. Die Fig. 1 zeigt bereits den nach einem Evakuierungsprozeß und Befüllprozeß mit Bremsflüssigkeit befüllten Primärkreis, der dem Kanalabschnitt 1 entspricht. Zur Veranschaulichung des Befüllungszustandes ist der entsprechende Kanalabschnitt 1 schwarz unterlegt. Vor der Befüllung des Primärkreises, die in der Regel vom Fahrzeughersteller konventionell oder mit Hochvakuumbefüllungstechnik durchgeführt wird, befindet sich im Sekundärkreis ein Lufteinschluß, der nunmehr durch das im nachfolgenden dargestellte Verfahren blasenfrei in der im Primärkreis befindlichen Hydraulikflüssigkeit absorbiert wird.

Das nunmehr vorgeschlagene Verfahren zur blasenfreien Befüllung der hydraulischen Kraftfahrzeugbremsanlage setzt einen Evakuierungsprozeß des Primärkreises voraus, bei dem alle elektromagnetisch ansteuerbaren Ventilelemente in ihrer Grundstellung verharren können. Dem Evakuierungsprozeß sollte sich in der Regel eine Vakuumleckprüfung anschließen, um eventuell bestehende Undichtigkeiten festzustellen und beseitigen zu können. Der Primärkreis wird in der Regel mit Hochvakuum beaufschlagt. Dem Evakuierungsprozeß und einer empfohlenen Vakuumleckprüfung folgt zweckmäßigerweise eine nochmalige Evakuierung, an die sich ein Befüllprozeß des Primärkreises mit entgaster Bremsflüssigkeit anschließt. Alle elektrisch ansteuerbaren Ventilelemente verharren hierbei wiederum in ihrer Grundstellung. Bei dem Befüllprozeß des Primärkreises handelt es sich um eine Druckbefüllung, der sich anschließend eine Stabilisierungsphase des Flüssigkeitsdrucks im Primärkreis anschließen sollte. Dem Füllprozeß des Primärkreises schließt sich ein Befüllprozeß des Sekundärkreises mit der Bremsflüssigkeit des Primärkreises an.

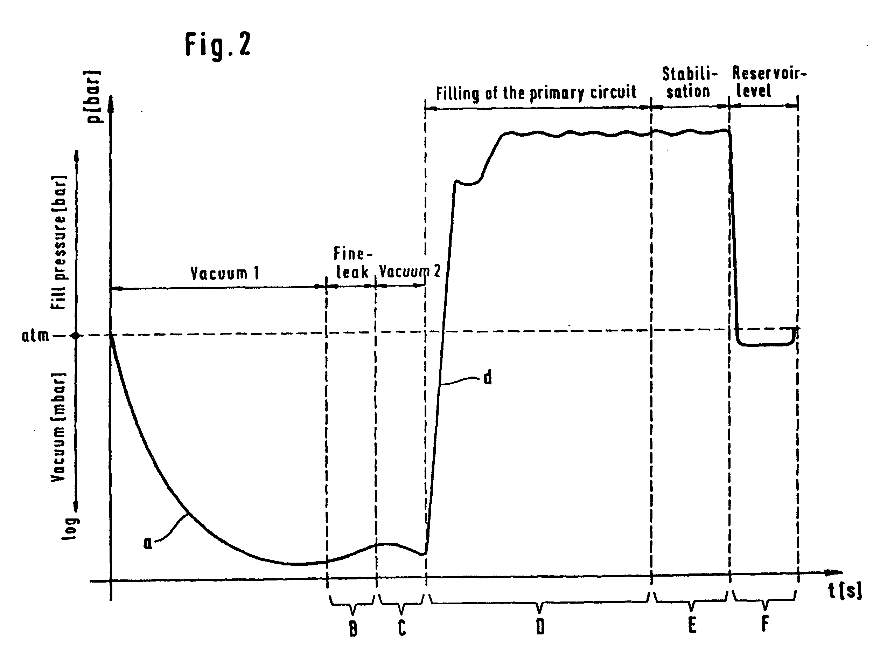

Die einzelnen Abschnitte der voranbeschriebenen Maßnahmen zur Evakuierung und Befüllung der Anlage finden sich im Diagramm nach Fig. 2 wieder. Hierin zeigt die Abszisse den zeitlichen Ablauf sowie die Ordinate den Druckverlauf während des Befüllprozesses der Bremsanlage. Gut zu erkennen ist zu Beginn des Evakuierungsprozesses der relativ steile Druckabfall entsprechend dem Kurvenabschnitt a, der zum Ende des ersten Evakuierungsprozesses nahezu waagrecht zur Abszisse verläuft und am Ende der Leckprüfung B geringfügig ansteigt, bis infolge einer nochmaligen Evakuierung im Abschnitt C das gewünschte Hochvakuum erreicht wird. Nach Abschluß des Evakuierungsprozesses läßt der sich anschließende Bremsflüssigkeit-Befüllvorgang entlang des Abschnittes D den Druck (Kennlinie d) im Primärkreis erheblich ansteigen. Es schließt sich die Stabilisierungsphase (Abschnitt E) an, bevor nach Abklemmen der Befüllvorrichtung sich der Druck im Bereich F des Diagramms letztlich auf den Atmosphärendruck einstellt.

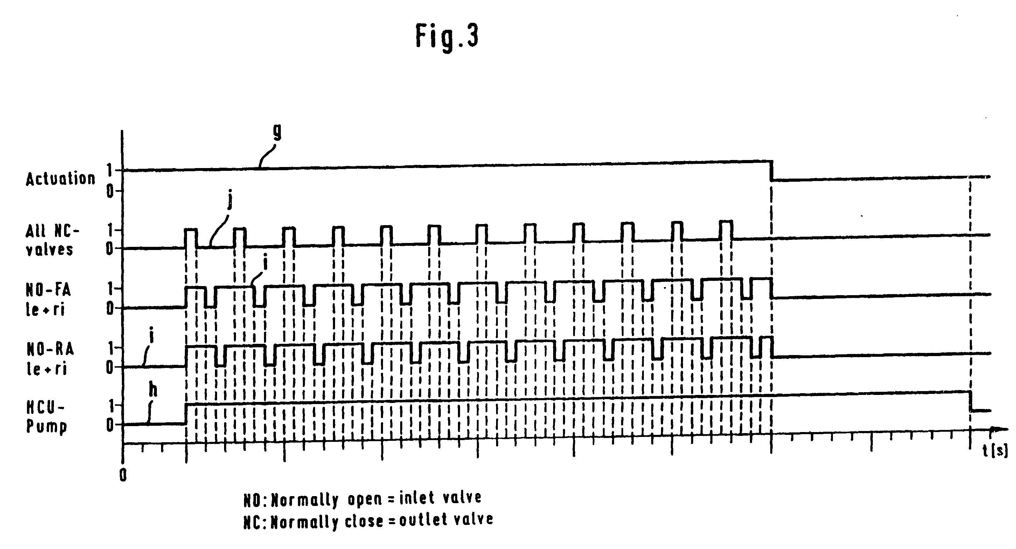

Einzelheiten zur anschließenden Befüllung des Sekundärkreises mit Bremsflüssigkeit unter hohem Druck aus dem Primärkreis, der sich die blasenfreie Absorptionsphase der aus dem Sekundärkreis verdrängten Luft durch die im Primärkreis befindliche Bremsflüssigkeit anschließt, werden unter Bezugnahme auf das nachfolgende Diagramm 3 erläutert. Während des Absorptionsprozesses ist das Bremspedal (Kennlinie g) betätigt, so daß ein Hydraulikdruck von etwa 50 - 70 bar in der Bremsanlage herrscht. Der Absorptionsprozeß ist programmgesteuert, um in jedem Falle Lufteinschlüsse des Sekundärkreises in die Bremsflüssigkeit blasenfrei gelöst übergehen zu lassen. Die Programmsteuerung sieht u.a. vor, daß die Pumpe (Kennlinie h) während des Absorptionsprozesses permanent läuft und die Einlaß-Ventilelemente (Kennlinie i) als auch die Auslaß-Ventilelemente (Kennlinie j) in einem festgelegten Puls-/Pausenverhältnis elektromagnetisch erregt werden. Fig. 3 zeigt die Charakteristik der Rechteckimpulse. Dies führt quasi zum Zerhacken und besseren Auflösung des Luftvolumens im Bremsflüssigkeitsvolumen im Sinne einer Einlagerung der Luft in der Bremsflüssigkeit im Sinne des Absorptionsprozesses. Durch die Verwendung von Bremsflüssigkeit, die hinsichtlich des Luftgehalts untersättigt ist, vermag die Bremsflüssigkeit im Rahmen des Absorptionsprozesses das Luftvolumen aufzulösen und in sich blasenfrei einzulagern. Aus dem Diagramm nach Fig. 3 geht überdies hervor, daß die Pulslänge der elektromagnetisch erregten Auslaß-Ventilelemente (Kennlinie j) kleiner ist, als die Pulslänge der elektromagnetisch erregten Einlaß-Ventilelemente (Kennlinien i) über die entlang der Abszisse aufgetragenen Zeitdauer des Absorptionsprozesses. Ferner geht aus dem Diagramm hervor, daß die Pulslängen der elektromagnetisch erregten Einlaß- und Auslaß-Ventilelemente einander überlagert sind, wobei im vorliegenden Beispiel der Öffnungsimpuls für die Einlaß-Ventilelemente der Hinterachse gegenüber dem Öffnungsimpuls der Einlaß-Ventilelemente der Vorderachse zeitlich verzögert folgt. Da die Öffnungsimpulslänge der Einlaß-Ventilelemente beider Kennlinien i von der Zeitdauer her gleich groß gewählt ist, folgt zwangsläufig auch nach jedem Öffnungsintervall ein zeitlich versetztes Schließen der Einlaß-Ventilelemente an der Hinterachse. Die Öffnungsimpulse für die Auslaß-Ventilelemente entsprechend der Kennlinie j sind den Öffnungsimpulsen der Einlaß-Ventilelemente überlagert und betragen nur etwa ein Viertel der Schaltdauer der Einlaßventile.

Soweit vorbeschriebene schlupfgeregelte Bremsanlage um ein elektrisch betätigbares, in Grundstellung geschlossenes Umschaltventil zum Zwecke eines automatischen Bremseneingriffs ergänzt wird, sind die in Fig. 3 gezeigten Pulsraster um die Schaltzyklen des Umschaltventils zu ergänzen, wobei darauf zu achten ist, daß die Puls-/Pausenansteuerung des Umschaltventiles vergleichbar einem Verlauf der Kennlinie j folgt, jedoch zeitlich versetzt innerhalb der jeweiligen Schließphase der Auslaßventile.

Durch das erfindungsgemäß vorgeschlagene Verfahren entfällt auf vorteilhafte Weise die elektrische Aktivierung der Auslaßventilelemente während der Evakuierung. Ferner werden keine zusätzlichen Vorfüllmaßnahmen und konstruktive Veränderungen der Anlage notwendig, da durch einen relativ einfachen programmgesteuerten Absorptionsprozeß der Luftgehalt im Sekundärkreis von einer mit Luft untersättigten Bremsflüssigkeit aufgenommen wird.

### Bezugszeichenliste

- 1: Erster Kanalabschnitt
- 2: Zweiter Kanalabschnitt
- 3: Auslaßventil
- 4: Einlaßventil
- 5: Bremsdruckgeber
- 6: Radbremse
- 7: Niederdruckspeicher
- 8: Pumpe
- 9: Pumpenventil

## Patentansprüche

1. Verfahren zur blasenfreien Befüllung einer hydraulischen Kraftfahrzeugbremsanlage mit Bremsflüssigkeit, mit einem Bremspedal zur Betätigung der Bremse, die mit Schlupfregelung und/oder automatischem Bremseneingriff versehen ist, deren Pumpe (8) bei Betriebsbereitschaft nach dem Rückförderprinzip Bremsflüssigkeit aus dem Sekundär- in den Primärkreis fördert, wobei wenigstens ein ausschließlich auf den Primärkreis bezogener Evakuierungsund Befüllprozeß mit Bremsflüssigkeit unter hohem Druck stattfindet und wobei während des Evakuierungsprozesses alle elektrisch ansteuerbaren Ventilelemente (3, 4) in Grundstellung verharren, **dadurch gekennzeichnet, daß**
- nach Abschluß des Evakuierungsprozesses der Befüllprozeß des Primärkreises mit entgaster, untersättigter Bremsflüssigkeit folgt,
- im Primärkreis der Bremsflüssigkeitsdruck derart hoch gewählt wird, daß Lufteinschlüsse im Bereich des Sekundärkreises über die Pumpe (8) in den Primärkreis gelangen, wenn das Ventilelement (3), das den Sekundärkreis vom Primärkreis normalerweise trennt, in eine Offenstellung schaltet,
- dem Befüilprozeß schließt sich ein programmgesteuerter Absorptionsprozeß an, während dem das Bremspedal betätigt ist, die Pumpe (8) permanent läuft und die Einlaß- und Auslaßventilelemente (3, 4) in einem festgelegten Puls/Pausenverhältnis elektromagnetisch erregt werden, bis die Lufteinschlüsse des Sekundärkreises in der Bremsflüssigkeit des Primärkreises aufgenommen und vollständig, d.h. blasenfrei gelöst sind.

2. Verfahren nach Anspruch 1, **dadurch gekennzeichnet, daß** der unbefüllte Primärkreis der Bremsanlage mit Hochvakuum beaufschlagt wird.

3. Verfahren nach Anspruch 1, **dadurch gekennzeichnet, daß** die Pulslänge des elektromagnetisch erregten Auslaßventils (3) kleiner ist, als die Pulslänge des Einlaßventils (4) über die Zeitdauer des Absorptionsprozesses.

4. Verfahren nach Anspruch 3, **dadurch gekennzeichnet, daß** die Pulslängen der elektromagnetisch erregten Einlaßund Auslaßventilelemente (3,4) einander überlagert werden.

5. Verfahren nach Anspruch 1, **dadurch gekennzeichnet, daß** sich dem Evakuierungsprozeß eine Vakuum-Leckprüfung anschließt.

## Claims

1. Method of bubble-free filling of brake fluid into a hydraulic automotive vehicle brake system which includes a brake pedal for the application of the brake that is equipped with slip control and/or automatic brake intervention, the pump (8) of which delivers brake fluid from the secondary circuit into the primary circuit according to the return delivery principle under operating conditions, wherein at least one bleeding process and filling process with brake fluid under high pressure takes place that is related exclusively to the primary circuit, and wherein all electrically operable valve elements (3, 4) remain in their initial position during the bleeding process,
**characterized in that**
- the filling process of the primary circuit with degased, undersaturated brake fluid follows after completion of the bleeding process,
- the brake fluid pressure in the primary circuit is chosen to be so high that air inclusions in the area of the secondary circuit are conveyed into the primary circuit by way of the pump (8) as soon as the valve element (3) which normally isolates the secondary circuit from the primary circuit switches to its open position,
- the filling process is followed by a program-controlled absorption process during which the brake pedal is applied, the pump (8) operates permanently, and the inlet and outlet valve elements (3, 4) are excited electromagnetically in a fixed pulse/pause ratio until the air inclusions of the secondary circuit are taken up in the brake fluid of the primary circuit and resolved completely, that means, without bubbles.

2. Method as claimed in claim 1,
**characterized in that** high vacuum is applied to the unfilled primary circuit of the brake system.

3. Method as claimed in claim 1,
**characterized in that** the pulse length of the electromagnetically excited outlet valve (3) is shorter than the pulse length of the inlet valve (4) for the duration of the absorption process.

4. Method as claimed in claim 3,
**characterized in that** the pulse lengths of the electromagnetically excited inlet and outlet valve elements (3, 4) are superposed on one another.

5. Method as claimed in claim 1,
**characterized in that** a vacuum leakage test follows the bleeding process.

## Revendications

1. Procédé à charger sans soufflures d'un système de frein d'automobile hydraulique de liquide de frein, comportant une pédale de frein pour actionner le frein prévu d'une commande par glissement et/ou d'un actionnement de frein automatique, la pompe (8) duquel, en état de service, transporte selon le principe de refoulement, liquide de frein du cycle secondaire au cycle premier, au moins un procédé d'évacuation et de chargement avec de liquide de frein exclusivement relatif au cycle premier ayant lieu sous pression haute et, pendant le procédé d'évacuation, tous les éléments de soupape (3,4) actionnables de manière électrique restant en position initiale, **caractérisé en ce que**
- suivant le procédé d'évacuation le cycle premier est chargé de liquide de frein dégazé et sous-saturé,
- la pression de liquide de frein dans le cycle premier est choisie haute de sorte que des poches d'air dans la région du cycle secondaire par l'intermédiaire de la pompe (8) se forment dans le cycle premier aussitôt que l'élément de soupape (3) normalement séparant le cycle secondaire du cycle premier change dans la position ouverte,
- le procédé de chargement est suivi par un procédé d'absorption réglé automatiquement pendant que la pédale de frein soit actionnée, la pompe (8) marche permanent et les soupapes d'admission et d'émission (3, 4) soient excitées de manière électromagnétique en relation d'impulsion/pause fixe jusqu'à ce que les poches d'air du cycle secondaire soient absorbées par le liquide de frein du cycle premier et dissolues complètement, c'est à dire sans soufflures.

2. Procédé selon la revendication 1, **caractérisé en ce que** vide élevé est appliqué au cycle premier non-chargé du système de frein.

3. Procédé selon la revendication 1, **caractérisé en ce que** la longueur de l'impulsion de la soupape d'émission (3) excitée de manière électromagnétique est plus réduite que la longueur d'impulsation de la soupape d'admission (4) pendant la durée du procédé d'absorption.

4. Procédé selon la revendication 3, **caractérisé en ce que** les longueurs d'impulsation des éléments de soupapes d'admission et d'émission (3, 4) excités de manière électromagnétique sont superposées l'une à l'autre.

5. Procédé selon la revendication 1, **caractérisé en ce qu'**un essai de fuite à vide vient suivre le procédé d'évacuation.
